(19) Europäisches Patentamt / European Patent Office / Office européen des brevets

(11) **EP 4 523 366 B1**

(12) **EUROPEAN PATENT SPECIFICATION**

(45) Date of publication and mention
of the grant of the patent:
**08.04.2026 Bulletin 2026/15**

(21) Application number: **23722724.4**

(22) Date of filing: **02.05.2023**

(51) International Patent Classification (IPC):
**H04L 9/08** *(2006.01)*

(52) Cooperative Patent Classification (CPC):
**H04L 9/0825**

(86) International application number:
**PCT/SE2023/050413**

(87) International publication number:
**WO 2023/219543 (16.11.2023 Gazette 2023/46)**

(54) **METHODS AND CONTROL ARRANGEMENTS FOR REPLACING A COMPROMISED CERTIFICATE AUTHORITY ASYMMETRIC KEY PAIR USED BY VEHICLES**

VERFAHREN UND STEUERUNGSANORDNUNGEN ZUM ERSETZEN EINES ASYMMETRISCHEN SCHLÜSSELPAARES MIT BEEINTRÄCHTIGTER ZERTIFIKATSAUTORITÄT ZUR VERWENDUNG DURCH FAHRZEUGE

PROCÉDÉS ET DISPOSITIFS DE COMMANDE POUR REMPLACER UNE PAIRE DE CLÉS ASYMÉTRIQUES D'UNE AUTORITÉ DE CERTIFICATION COMPROMISE UTILISÉE PAR DES VÉHICULES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.05.2022 SE 2250569**

(43) Date of publication of application:
**19.03.2025 Bulletin 2025/12**

(73) Proprietor: **Scania CV AB**
**151 87 Södertälje (SE)**

(72) Inventor: **KHODAEI, Mohammad**
**117 57 Stockholm (SE)**

(74) Representative: **Scania CV AB**
**Patents, GP 117kv**
**151 87 Södertälje (SE)**

(56) References cited:
**EP-A1- 3 965 392     US-A1- 2007 223 702**
**US-A1- 2008 232 583**

## Description

Technical field

The present disclosure relates to techniques in the context of vehicles, and more specifically to methods for replacing a compromised certificate authority asymmetric key pair used by vehicles for secure communication. The disclosure also relates to control arrangements configured to perform the methods, to a vehicle, a computer program and to a computer-readable medium.

Background

In vehicles, a Public Key Infrastructure, PKI, is used to establish secure communication for example in-between vehicles, with a backend and also internally between different control units. A root anchor, commonly referred as the root Certificate Authority, CA, of the PKI is typically managed by an Original Equipment Manufacturer, OEM, of the vehicles.

The root CA generates an Asymmetric Key Pair, AKP, comprising a private key and a public key. The root CA also issues a self-signed root CA certificate comprising the public key of the CA AKP. The root CA certificate identifies the root CA. The root private key is used for issuing certificates to other entities. In this way trust and encrypted communication between the entities of the PKI is enabled.

However, the PKI relies on the trustworthiness of the root CA. Hence, if the asymmetric key pair of the root CA is compromised, or there is a vulnerability found in the cryptography library, used to generate the root CA key pairs, then all certificates signed by the certificate authority 2 has to be replaced and a new self-signed root CA certificate has to be issued. A new self-signed root CA certificate has to be distributed to all entities of the PKI, such as to all vehicles of the OEM, in a secure way. The current solution is to take all the vehicles, to the workshops and/or change the hardware to flash the new root CA certificate, which is costly for the OEM. Moreover, this solution is not practical at scale and contradicts with Over-The-Air, OTA, updates requirements.

The alternative would be shipping the new self-signed root CA certificate Over-The-Air, which is challenging in practice as any entity with bad intentions could distribute its own version of the self-signed root CA certificate.

Essentially, the root certificates have to be embedded into the systems and configured to be trustworthy by some secure means, usually through physical distribution. At the Internet, well-known root certificates are embedded as part of the browsers, e.g., Chrome and Firefox, and they remain the trust anchors. In case of a compromise, the root certificates cannot be used to establish protected communication, i.e., integrity, confidentiality, and authenticity. So, there is a need for an improved mechanism to replace compromised root CA certificates to ensure that vehicles can always communicate in a secure way.

Summary

It is an object of the disclosure to provide a parallel mechanism that ensures that there is always a secure way of communicating with a vehicle, even if one type of cryptographic system is compromised.

According to a first aspect, the disclosure relates to a method, for use in a control arrangement arranged in a vehicle, for replacing a compromised active root certificate authority asymmetric key pair, CA AKPs, used for secure communication. The method comprises storing in the control arrangement one or more dormant public keys of one or more dormant root CA AKPs, wherein the one or more dormant public keys are encrypted by a respective master key and storing, in the control arrangement, an active public key of the active root CA AKP. The method further comprises receiving, from a certificate authority, a message revealing a master key of one of the one or more dormant root CA AKPs that constitutes a substituting root CA AKP that shall replace the active root CA AKP due to compromising, decrypting the dormant public key of the substituting root CA AKP using the master key revealed by the received message, and replacing the active public key with the decrypted dormant public key. The master key used for encrypting the public key of the substituting root CA AKP adds a layer of security that makes it possible to replace an active public key with a dormant public key without bringing the vehicles to the service station. Hence, to brute force the system, both security layers have to be hacked. Hence, the proposed technique provides an efficient contingency plan to recover from an incident.

In some embodiments, the method comprises decrypting and/or validating authenticity of the received message. Thereby, the control arrangement can verify that the message initiating replacement was sent from the certificate authority and not from someone else.

In some embodiments, the method comprises verifying that the substituting root CA AKP is a valid replacement of the active root CA AKP. Thereby, it is avoided that an attacker attempts to create its own dormant certificates.

In some embodiments, the one or more dormant root CA AKP have been assigned a particular order in which they are to replace the active root CA AKP and wherein the verifying comprises validating that the replacement root CA AKP is a valid successor of the active root CA AKP. By assigning a certain ordering, the valid substitute can be identified in a feasible way.

In some embodiments, the valid order is based on a hash included in a certificate comprising the dormant public key of the substituting root CA AKP, wherein the hash is calculated based on a salt included in the active public key. A hash function is one possible method that can be used to establish the certain order. In some embodiments, the hash is calculated based on the salt and a pepper included in the received message.

In some embodiments, the replacing comprises revoking the active root CA AKP and activating the substituting root CA AKP, whereby the substituting root CA AKP becomes the active root CA AKP. Thereby, the compromised CA AKP can never be reactivated.

In some embodiments, the method comprises sending to the certificate authority a confirmation that the active root CA AKP has been successfully replaced. Thereby, the certificate authority knows when the replacement is complete.

According to a second aspect, the disclosure relates to a method for use in a certificate authority, for replacing a compromised root certificate authority asymmetric key pair, root CA AKP, used for secure communication by a plurality of control arrangements arranged in vehicles. The method comprises storing, in the certificate authority, one or more private keys of one or more dormant root CA AKPs, wherein corresponding one or more dormant public keys are stored in the control arrangements encrypted by a respective master key. The method also comprises storing, in the certificate authority, a private key of the active root CA AKP. The method further comprises detecting compromising of the active root CA AKP; obtaining, in response to the detecting, information revealing a master key of a substituting root CA AKP that shall replace the active root CA AKP, wherein the substituting root CA AKP corresponds to one of the one or more dormant root CA AKPs. The method comprises sending, to the control arrangements, a message revealing the master key, wherein the obtained master key enables the control arrangements to decrypt a dormant public key of the substituting root CA AKP and replacing the private key of the active root CA AKP with the private key of the substituting root CA AKP.

In some embodiments, the message is signed by the private key of the active root CA AKP. In some embodiments, the master key required for decrypting the dormant public key of the substituting root CA AKP is included in the sent message.

In some embodiments, the obtaining comprises retrieving the master key from another entity. By storing the master key separately from the CA AKP libraries risk that both security systems are compromised is reduced.

In some embodiments, only one of the dormant root CA AKPs is a valid substituting root CA AKP of the active root CA AKP and wherein the obtaining comprises obtaining the master key of the valid substituting root CA AKP.

In some embodiments, the one or more dormant root CA AKP have been assigned a particular order in which they are to replace the active root CA AKP and wherein the obtaining is based on the assigned order.

In some embodiments, the replacing comprises revoking the active root CA AKP and activating the substituting root CA AKP, whereby the substituting root CA AKP becomes the active root CA AKP.

In some embodiments, the method comprises receiving from one or more of the plurality of control arrangements a confirmation that the active root CA AKP has been successfully replaced.

In some embodiments, the particular order is only known by the certificate authority server and the control arrangement.

According to a third aspect, the disclosure relates to a computer program comprising instructions which, when the program is executed by a computer, cause the computer to carry out the method according to the first or second aspect.

According to a fourth aspect, the disclosure relates to a computer-readable medium comprising instructions which, when executed by a computer, cause the computer to carry out the method according to the first or second aspect.

According to a fifth aspect, the disclosure relates to a control unit configured to perform the method according to any one of the embodiments according to the first or second aspect.

According to a sixth aspect, the disclosure relates to a vehicle comprising a control arrangement configured to perform the method according to the first aspect.

Brief description of the drawings

Fig. 1 illustrates a certificate authority and vehicles in which the proposed technique may be implemented.

Fig. 2 illustrates control arrangements of a vehicle and a certificate authority.

Fig. 3 illustrates signaling between the vehicle and the certificate authority when replacing a compromised certificate.

Fig. 4 illustrates how active and dormant certificates can be interconnected.

Fig. 5 illustrates how individual master keys can be derived from one single secret key.

Detailed description

This disclosure is based on the idea of leveraging two different cryptosystems for the root Certificate Authority, CA, and the other entities of the PKI, such as Electronic Control Units, ECUs, arranged in vehicles. In case of one cryptosystem being compromised, the root CA can still reach other entities in a secure manner by leveraging the other cryptosystem.

The root CA that owns the trusted root of the PKI is hereafter referred to as simply the CA. However, it should be appreciated that the proposed method may also be implemented by intermediate CAs certified by a root CA.

The idea is to let the CA issue, not only one, but at least two CA Asymmetric Key Pairs, CA AKPs. One CA AKP is active and used for communication and the others are dormant, i.e., passive or inactivated and are intended to replace the active one in case of compromising. Each CA AKP comprises a private key and a public key. CA certificates comprising the active and dormant public keys of the CA AKPs may be pre-stored in entities of the PKI, for example in ECUs of vehicles during production. However, CA certificates comprising public key of the dormant CA AKPs are encrypted with individual master keys known only by the OEM. Hence, the dormant CA certificates remain dormant, or inactive, until the corresponding master key is revealed. The active and dormant CA certificates have identical attributes, e.g., validity periods "Not Before" and "Not After", except for the public key.

In case the active CA AKP is compromised, then the OEM simply discloses the master key, used to encrypt a substitute dormant CA certificate that shall replace the active CA certificate. This essentially notifies all the ECUs that the 'active' CA Certificate is compromised and that all ECUs shall decrypt the next dormant CA certificate and replace the active CA certificate. In this way, there is always a secure way to establish from the OEM to the ECUs.

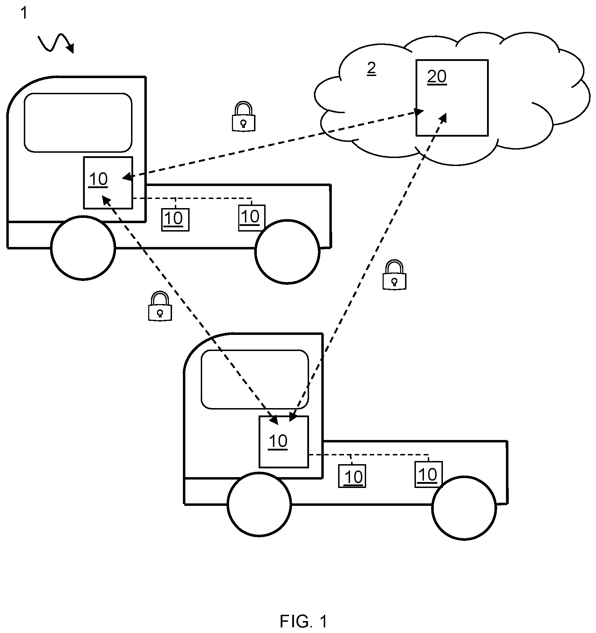

The proposed technique will now be described with reference to Figs. 1-5. Fig. 1 illustrates a certificate authority 2, such as an OEM, and vehicles 1. In some embodiments the certificate authority 2 is a root certificate authority. The vehicles 1 may be any type of vehicles, including buses, trucks, or other similar manned or unmanned vehicles. The vehicles 1 are communicating with the certificate authority 2. More specifically, control arrangements 10 (e.g., Electrical Control Units, ECUs) arranged in the vehicles 1 are communicating with a control arrangement 2 of the certificate authority 2. The control arrangements 10 within one vehicle 1 communicate directly with each other over a Controller Area Network, CAN. Control arrangements 10 arranged in different vehicles 1 may also communicate with each other using so called Vehicle-to-Vehicle communication, V2V. The V2V communication may be integrity-protected based on Electrical Control Unit, ECU, certificates issued by the certificate authority 2. An ECU certificate herein refers to a certificate issued to a control arrangement 10 of a vehicle 1.

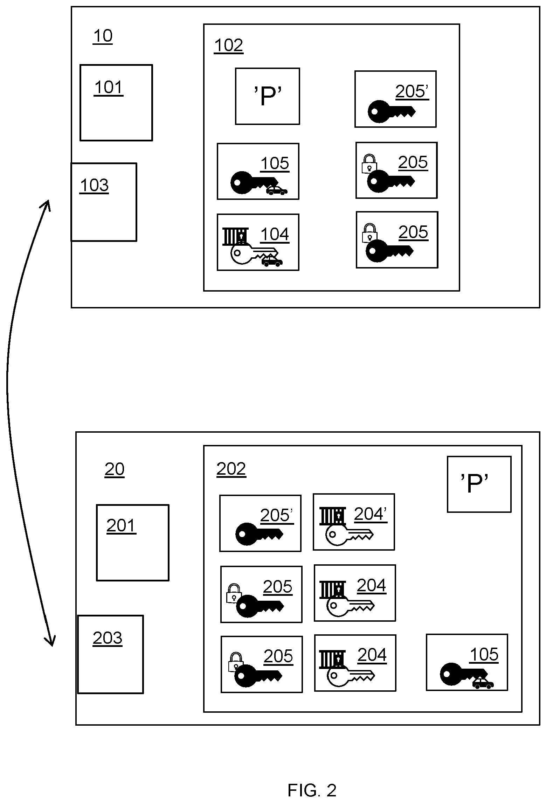

Fig. 2 illustrates a control arrangement 10 arranged in a vehicle 1 and a control arrangement 20 of a certificate authority 2 in further detail. In some embodiments, the control arrangements 10, 20 are not "units" in a physical sense, but in a functional sense. Hence, in some embodiments the control arrangements 10, 20 comprise several physical control devices that operate in cooperation.

The control arrangement 20 arranged in a certificate authority 2 is basically a security management server. Hence, its main task is to issue and manage digital certificates to entities of a Public Key Infrastructure, PKI, whereby secure communication between the entities is enabled. In other words, the control arrangement 20 is typically operated by an OEM.

The control arrangement 20 comprises at least one processor 201 and memory 202. The control arrangement 20, or more specifically a processor 201 of the control arrangement 20, is configured to cause the control arrangement 10 to perform all aspects of the method for use in a certificate authority 2 described above and below. This is typically done by running computer program code 'P' stored in the data storage or memory 202 in the processor 204 of the control arrangement 20. The memory 202 may also be configured to store various relevant parameters, such as private and public keys. In Fig. 2, private keys are white and public keys are black.

More specifically, the control arrangement 20 of the certificate authority 2 stores various types of encryption keys used for secure communication. Most importantly, the control arrangement 20 stores an active Certificate Authority Asymmetric Key Pair, CA AKP. In some embodiments, the active CA AKP is the topmost key pair in the Public Key Infrastructure, PKI, hierarchy. The CA AKP is used to authenticate and sign digital certificates. The active CA AKP comprises an active private key 204' and an active public key 205' (the apostrophe herein indicates that a key is active). The active public key 205' is shared with other entities in the PKI and is used to validate intermediate or regional CAs. The active private key 204' is used by the root certificate authority 2 to issue certificates for intermediate CAs. Intermediate or regional CAs issue certificates for end-entities, e.g., ECU 10 arranged in vehicles 1.

A certificate is a digital document that has many fields. The certificate comprises a public key of the holder. The most significate part of a certificate is the signature part created by the CA AKP that cannot be forged. Essentially, the issuer, i.e., the certificate authority 2, signs a document with various parameters such as serial number, issuer name, identity, validity time, cryptographic algorithms, etc. and from that point on, it is called a certificate. A recipient of a certificate can verify that there is a valid public key inside the certificate and that the public key is bound to entity X, the identity in the certificate. Asymmetric cryptography is commonly known in the art and will therefore not be described in further detail.

It is herein proposed that the control arrangement 20 stores not only the active CA AKP, but also at least one dormant CA AKP comprising respective dormant private keys 204 and dormant public keys 205. The dormant CA AKP shall be used to replace the active CA AKP in case of compromising.

It should be appreciated that all the private keys active and dormant 204', 204 are securely stored in the control arrangement 20, in a conventional secure manner for storing private keys, which is illustrated by bars. For example, the private keys 204', 204 are protected using a Hardware Security Module, HSM. An HSM is basically a dedicated cryptographic processor specifically designed for handling various functionality associated with cryptography. In Fig. 2 the HSM protection is illustrated by bars. Typically, each pair of public key and private key is generated inside the HSM, but the private key 204', 204 never leaves the HSM. In principle, it should be practically infeasible to extract the private key from an HSM. The HSM may be implemented based on Software or Hardware, or even in the cloud.

In practice, this means that the private keys 204', 204 cannot be accessed, but instead different functions are invoked, and data is signed by the private key inside the HSM, i.e., all operations happen inside the HSM. The method for replacing the active AKP with one of the dormant ones will be described in further detail below.

The control arrangement 20 also stores the corresponding public keys 205', 205 of the CA AKPs. Typically, the control arrangement 20 stores CA certificates comprising the public keys 205', 205. Hence, when herein stated that a public key is stored, it typically means that a certificate comprising the public key is stored. The active CA certificate comprising the active public key 205' does not need to be secured, as it is public. However, the dormant CA certificates comprising the dormant public keys are encrypted with individual independent keys (illustrated by a padlock which here means encryption with the master key) that are not revealed until the corresponding CA certificates are activated. The CA certificates are self-signed by the certificate authority 2 itself, as it is the trust anchor of the hierarchy.

In addition to the CA AKPs, the control arrangement 20 stores public keys of other entities in the PKI. For example, the control arrangement 20 stores ECU public keys 105 of ECU AKPs of ECUs 10 arranged in vehicles 1 (for simplicity only one illustrated in Fig. 2). The ECU public keys 105 are typically stored in signed ECU certificates. The ECU public keys 105 are used to encrypt information before it is sent to the vehicles 1. Hence, based on the CA AKP and an ECU AKP the control arrangement 20 encrypted communication with a control arrangement 10 arranged in a vehicle 1 can be established.

The control arrangement 20 may also comprise a communication interface 203 for communicating with other entities, such as with control arrangements 10 of vehicles 1. The communication may be implemented based on any standardized or proprietary communication protocol, such as Vehicle-to-Everything, V2X, Controller Area Network (CAN), Flex-Ray and Ethernet.

A control arrangement 10 arranged in a vehicle 1 is configured to control one or more subsystems of the vehicle 1. The control arrangement 10 may be a control device in a functional sense. However, for simplicity, the control arrangement 10 is herein also referred to as simply the ECU 10, even though it may comprise several ECUs. The ECU 10 comprises a processor 101 and memory 102. The ECU 10, or more specifically the processor 101 of the ECU 10, is configured to cause the ECU 10 to perform all aspects of the method for use in a vehicle 1 described above and below. This is typically done by running computer program code 'P' stored in the data storage or memory 102 in the processor 101 of the ECU 10. The memory 102 may also be configured to store various relevant parameters, such as private and public keys.

At least one ECU 10 of a vehicles 1 also comprise a communication interface 103 for communicating with other control arrangements of the vehicle, for example over the ECU and/or with external systems, such as with the control arrangement 20 of the certificate authority 2. This ECU may act as a gateway for other ECUs in the vehicle 1. The communication may be implemented based on any standardized or proprietary communication protocol, such as V2X, Controller Area Network (CAN), Flex-Ray and Ethernet.

The control arrangement 10 arranged in a vehicle 1 also stores various types of encryption keys. Most importantly, the control arrangement 10 stores an active public key 205' of the active Certificate Authority Asymmetric key pair, CA AKP. More specifically, the ECU 10 stores a CA certificate comprising the active public key 205'. In some embodiments, a CA certificate comprising the active public key 205' of the certificate authority 2 is stored in the ECU 10. Because it is signed, active and public, no specific protection is required. However, the storing and replacement of the active public key 205' of the certificate authority 2 has to be controlled, such that it cannot be replaced. Therefore, it is typically configured during manufacturing and replacement can only be done at a service station or using the proposed technique. The active public key 205' is the trust anchor of the PKI which facilitates protected communication with the certificate authority 2.

It is herein proposed that the ECU 10 stores not only the active public key 205' of the active CA AKP, but also dormant public keys 205 of one or more dormant the CA AKP that shall be used to replace the active public key 205' of the CA AKP in case of compromising. The dormant public keys 205 are encrypted with a master key before they are stored (illustrated by a padlock which here means encryption with the master key). In other words, all the dormant CA certificates both in the vehicle 1 and in the certificate authority 2 should be encrypted by the master key. In some embodiments, the distinct master keys are completely independent. In some embodiments the distinct master keys are generated from a common seed or secret. Typically, CA certificates comprising the dormant public keys 205 are encrypted and stored in the ECU 10. If there are multiple dormant public keys 205, then each dormant public key 205 is encrypted by an individual master key. The master keys is only known, or derivable, by the OEM. The method for decrypting and replacing the active public key 205' with one of the dormant ones 205 will be described in further detail below.

The ECU 10 also stores its own AKP, herein called an ECU AKP. The ECU AKP comprises an ECU private key 104 and an ECU public key 105. The ECU private key 104 is securely stored, for example by an HSM (illustrated by bars), as described above. As a general rule, all private keys both in the vehicle 1 and in the certificate authority 2 are typically stored in a secure module. The ECU public key is stored in an ECU certificate (signed and) issued by the certificate authority 2. The ECU certificate is public, thus being shared by other entities of the PKI to enable protected communication. As a general rule, active certificates and the vehicle certificates are public info, thus they don't need to be encrypted nor protected. In addition, the ECU 10 typically stores certificates comprising public keys of other entities in the PKI, not shown in the Fig. 2, such as ECU public keys of other control arrangements 10 arranged within the vehicle 1 or in other vehicles.

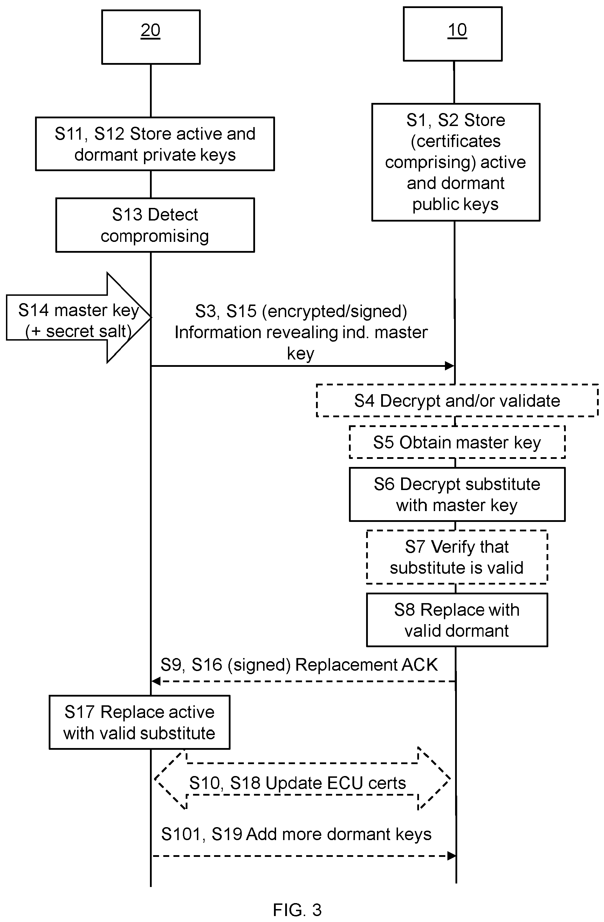

The proposed methods for use in a control arrangement 20 of a certificate authority 2, and for use in a control arrangement 10 arranged in a vehicle 1, for replacing a compromised CA certificate will now be described with reference to the flow chart of Fig. 3, as well as to the other figures. Fig. 3 illustrates signaling between the vehicle 1 and the certificate authority 2 when replacing a compromised CA certificate. When a compromised active CA certificate is replaced, this method is typically performed for all entities of the PKI, unless they are brought to a service station for manual replacement of the compromised CA certificate.

In Fig. 3 method steps performed in the authority server 20, or more specifically in a control arrangement 20 of an authority server 2, are illustrated on the left side. Method steps performed in the vehicle 1, or more specifically in a control arrangement 10 (herein simply called ECU 10) of a vehicle 1, are illustrated on the right side. The methods may be implemented as computer programs comprising instructions which, when the program is executed by a computer, e.g., a processor in the control arrangements 10, 20 Fig. 2, cause the computer to carry out the method. According to some embodiments, the computer program is stored in a computer-readable medium, e.g., a memory or a compact disc that comprises instructions which, when executed by a computer, cause the computer to carry out the method.

A prerequisite of the proposed technique is that dormant CA certificates are issued by the certificate authority 2. Stated differently, the idea to let the certificate authority 2 issue at least two CA certificates, considering one to be active and the other to be dormant/passive. However, the dormant ones are encrypted with a master key, such as a symmetric key, and the encrypted dormant CA certificates are stored in the vehicles 1. The master key is known only by the OEM. The active and dormant CA certificates have identical attributes, e.g., validity periods "Not Before" and "Not After", but the public key. In other words, the method for use in a certificate authority 2 comprises storing S11 in the certificate authority server 20 one or more private keys of one or more dormant CA AKPs 204. The method for use in a certificate authority further comprises storing S12, in the certificate authority 2, a private key of the active CA AKP 204'.

A purpose of having multiple dormant certificates is solving the problem of replacing a compromised trust anchor Root CA certificate. For example, if the validity period of the active CA certificate is 10 years, another 5 dormant CA certificates with identical validity period are issued. If the active one is compromised, the proposed method enables switching to another one. However, in some embodiments may additionally and/or alternatively be used to replace certificates when the certificates get expired. In that case, some of the dormant CA certificates could have a different validity interval. For example, there may be one active certificate with validity interval from time A to time B. Then, three dormant certificates with validity interval from time B to time C. Then another three dormant certificates with validity interval from C to D. The proposed method may then in addition be used to replace a CA certificate that is about to expire. However, as long as no keys are compromised, the server 2 may alternatively replace expired certificates over the air using common techniques that does not require any master key, provided that the currently active certificate is still valid.

In one example embodiments the following certificates are stored in the control arrangement 10:

- Active Root CA certificate: validity period: A-B
- Dormant-1 Root CA certificate: validity period: A-B
- Dormant-2 Root CA certificate: validity period: A-B
- Dormant-3 Root CA certificate: validity period: A-B
- Dormant-4 Root CA certificate: validity period: B-C
- Dormant-5 Root CA certificate: validity period: B-C
- Dormant-6 Root CA certificate: validity period: B-C
- Dormant-7 Root CA certificate: validity period: C-D
- Dormant-8 Root CA certificate: validity period: C-D
- Dormant-9 Root CA certificate: validity period: C-D

In this example, when time B approaches, one of the certificates 4-6 may be activated to replace the currently active certificate using the methods described herein.

It should be noted that in some embodiments the dormant certificates are interconnected. In this example, one may assume that they are interconnected based on the number. If Dormant-1 is used (or active), and the next dormant is decided by the server 2 to be dormant-4, then the server 2 may have to disclose the master keys for dormant-2, dormant-3, and finally dormant-4. The reason is that the ECU may need a complete hash chain to validate dormant-4, as described below.

The CA certificates comprising the active and dormant public keys 205', 205 of the CA AKPs may, as stated above, be pre-programmed in control arrangements 10 of vehicles. This may be done during manufacturing or when a vehicle 1 visits a workshop. In some embodiments, additional dormant CA certificates may be sent out as the previous dormant AKPs are consumed, i.e., used to replace the active AKP. This of course requires that there is an uncompromised active AKP that can be used for encrypting communication when sending out additional dormant CA certificates. In other words, the method, for use in a vehicle 1 comprises storing S1 in the control arrangement 10 of the vehicle 1 one or more (CA certificates comprising) dormant public keys 204 of one or more dormant CA AKPs, wherein the one or more public keys 204 are encrypted by a respective master key. The method, for use in a vehicle 1, further comprises storing S2, in the control arrangement 10, a public key 204' of the active CA AKP. More specifically, certificates comprising the dormant public keys 204 are stored in the control arrangement 10. The certificates are encrypted. Thereby, the dormant public keys 204 are also encrypted.

In some embodiments, the active and the dormant CA certificates are not connected at all. Such an implementation would require an extra level of security or resiliency. However, with such an implementation, it is difficult to add new dormant CA certificates without bringing the vehicle 1 to a service station. The reason is that the vehicle 1 cannot know if a dormant CA certificate is a valid replacement of a compromised active CA certificate. For example, if the active CA certificate is compromised and an attacker gets access to the private key 204' of the active CA, then it can replace the encrypted dormant CA certificates with false ones and send a request to activate one of the false dormant ones. This means that the attacker does not need to brute-force or break the distinct master key; the attacker simply generates a self-signed CA certificate and encrypts with its master key. Hence, if the active and the dormant CA certificates are not interconnected, the procedure for adding new dormant CA certificates has to be protected instead, for example by specific hardware or software controlled by the OEM.

In some embodiments, the active and the dormant CA certificates are therefore interconnected in some way. In other words, the CA certificates, storing the active and dormant public keys 204', 204 of the CAs, comprise some kind of information that makes it possible to verify that a certain dormant public key 204 is a valid replacement of an active public key 204'. Examples of such verification will be described in further detail below. In some embodiments, the one or more dormant CA AKP have been assigned a particular order in which they are to replace the active CA AKP and wherein the obtaining S14 is based on the assigned order. The order is in some embodiments only known by the certificate authority 2 (such as the OEM).

Compromising of the certificate authority 2 may be detected in different ways. For example, if an error or bug is found in the certificate authority 2, one may assume that it is compromised. As another example, the cryptography library, used to generate the cryptographic primitives, has vulnerabilities which could be an indication that a hacker may access or derive the private key. Hence, compromising is typically detected based on deviating behavior within the certificate authority 2. In other words, the method for use in a certificate authority 2 comprises detecting S13 compromising of the active CA AKP. The process of replacing the active CA AKP with a substituting CA AKP is now started. The substituting CA AKP is a dormant AKP that is a valid successor of the active CA AKP.

In case the active CA Certificate is compromised, then the OEM should disclose the master key corresponding to the new CA certificate that shall replace it, herein called the substitute CA AKP corresponds. The substitute CA AKP corresponds to one of the one or more dormant CA AKPs. The substitute CA AKP is a CA AKP that is intended to replace the active CA AKP. In some embodiments, only one of the dormant CA AKPs is a valid substituting CA AKP of the active CA AKP and wherein the obtaining S14 comprises obtaining the master key of the valid substituting CA AKP. The valid substitute may be the next dormant CA AKP in a certain order.

If the authority server 2 does not already have access to it, the master key has to be obtained, such as retrieved or calculated. In other words, the method for use in a certificate authority further comprises obtaining S14, in response to detecting S13 the compromising, information revealing a master key of a substitute CA AKP that shall replace the active CAAKP. The obtaining S14 may involve fetching the master key and/or generating it. More specifically, the obtained information could be the master key as such, or information that can be used to create or generate the master key of a substitute CA AKP.

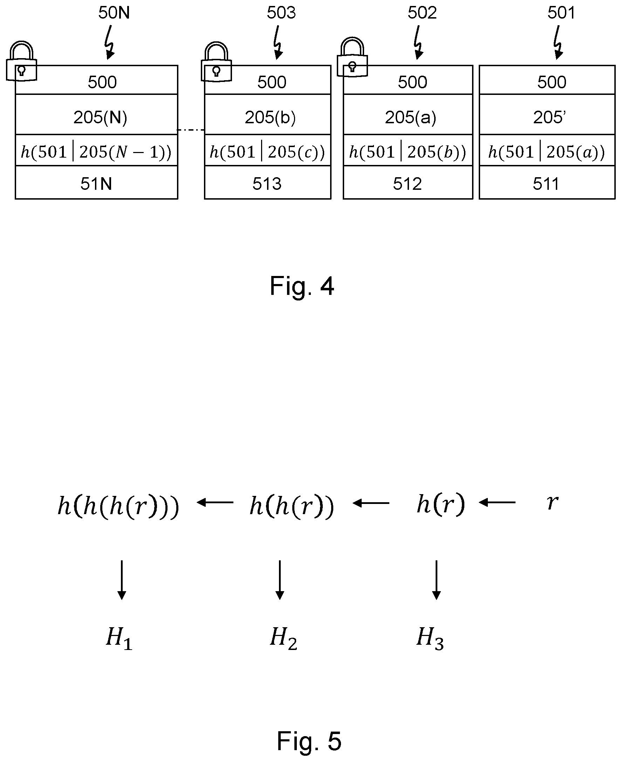

In some embodiments only one secret piece of information, herein called master key, is used to generate master keys of several dormant CA AKPs. In other words, every time a dormant CA certificate is to be activated, the secret piece of information is used to efficiently derive an individual master key that can be used to decrypt a certain dormant CA certificate without revealing the secret piece of information. For example, if there are, e.g., 10 dormant CA certificates, then the certificate authority 2 does not need to store and protect 10 different master keys. Instead, only one master key is securely stored, and the 10 master keys are derived from that one. This will be described in further detail below in connection with Fig. 5.

The master key, or information revealing the master key, such as a corresponding master secret, should be stored in a safe place, such as in a secure storage. For example, the master key or information is stored in an entity, such as a secure data storage, separated from the private keys. The intention is that a hacker that has managed to access the private keys should not automatically also have access to information revealing the master key. The certificate authority 2 then has to retrieve the master key, or the master secret, when the CA AKP shall be replaced. In other words, in some embodiments, the obtaining S14 comprises retrieving the master key or master secret from another entity, e.g., an HSM.

For example, if an on-site Hardware Secure Module, HSM, is used, then the master key may be stored by an HSM provided by supplier A and the CA private key on an HSM provided by supplier B. In a cloud solution, security systems provided by independent service providers may be used to accomplish this. Hence, in some embodiments the active CA AKP and the master key are protected by independent security systems.

Once information revealing the master key is revealed, the master key should be distributed to entities within the PKI. In other words, the method for use in a certificate authority comprises sending S15, to the control arrangements 10, a message revealing the master key, wherein the obtained master key enables the control arrangements 10 to decrypt a public key 205 of the substitute CA AKP. This essentially notifies the vehicle 1 that the active CA Certificate is compromised and that all control arrangements 10 should decrypt the next dormant CA Certificate and replace that one to be the active one. In this way, there is always a secure way to establish from the OEM to the ECUs.

The message sent is typically signed such that the recipients can verify that it was sent by the certificate authority 2. In other words, in some embodiments, the message is signed by the private key of the active CA AKP 204'. The message is typically also integrity protected. In some embodiments the message is encrypted with ECU public key 105 of the control arrangement 10.

The master key is typically explicitly signaled by the message, to avoid further problems associated with establishing a secure communication to a storage, where the master key can be fetched. In other words, in some embodiments, the master key required for decrypting the dormant public key 205 of the substitute CA AKP is included in the sent message. However, it is of course possible that there are additional layers of encoding and/or encryption on the master key.

The message revealing the master key is typically received by all entities of the PKI affected by the compromising. In other words, the method for use in a vehicle 1 comprises receiving S3, from a certificate authority 2, a message revealing a master key of one of the one or more dormant CA AKPs that constitutes a substituting CA AKP that shall replace the active CA AKP due to compromising. Stated differently, the control arrangement 10 receives a message informing the control arrangement 10 that the active CA certificate is compromised and shall be replaced. The control arrangement 10 is also provided with information that reveals or enables it to retrieve (or generate) the master key of a dormant CA certificate that shall replace the compromised active CA certificate. In some embodiments, the master key for decrypting the dormant public key 205 of the substitute CA AKP is included in the received message.

If the message is encrypted the control arrangement 10 decrypts the message using ECU's private key 104, and then validates that the signature of the message is properly generated by the active CA AKP of the certificate authority 2. Note that even if the active CA AKP is compromised it can still be used to authenticate the certificate authority 2. In other words, some embodiments, the method for use in a vehicle 1 comprises decrypting S4 and/or validating authenticity of the received message.

In some embodiments, the received message does not include the master key but instead comprises information required to obtain the master key. In these embodiments the method comprises obtaining S5 the master key for decrypting a public key 205 of the substituting AKP based on the received message. For example, the information may include an address and credentials required to retrieve the master key from a remote entity. In some embodiments, the obtaining S5 comprises retrieving, based on information included in the received message, information from one or more other parties, and compiling the master key based on the retrieved information.

Once the master key has been obtained the public key of the substituting CA AKP can be activated. In some embodiments, this involves decrypting a dormant CA certificate including the dormant public key of the substitute CA AKP. In other words, the method for use in a vehicle 1 comprises decrypting S6 the dormant public key 205 of the substituting CA AKP using the master key revealed by the received message.

If there are several dormant CA certificates, then the ECU 10 may assure that the substituting CA certificate is valid to replace the active CA certificate. In other words, in order to protect the method from fake dormant CA certificates, one may bind the active CA certificate to a particular dormant one, being a valid successor. This may be done like in a chain-like manner. In other words, in some embodiments, the method for use in a vehicle 1 comprises verifying S7 that the substituting CA AKP is a valid replacement of the active CA AKP. For example, the one or more dormant CA AKP may have been assigned a particular order in which they are to replace the active CA AKP. In these embodiments, the verifying S7 comprises validating that the replacement CA AKP is a valid successor of the active CA AKP.

One way of assigning a valid order is to calculate a fingerprint, such as a hash value of the active public key 205'. Then, this fingerprint may be inserted into the certificate comprising a dormant public key 205 being a valid replacement. The same process may be done when generating the certificate comprising the next dormant public key, i.e., inserting the hash of dormant public key-1 into the certificate comprising dormant public key-2, and so on.

In some example embodiments, the certificate authority 2 may calculate the hash digest (or fingerprint) based on a salt and a pepper;

$$h \left( substitute\ public\ key \mid salt \mid pepper \right)$$

and include it in a dormant certificate being a valid substitute of a preceding certificate. The salt is a random number which is stored in clear text (in the preceding certificate) and pepper is a secret salt, i.e., a random number that should be kept secret and stored on a secure storage. One can also skip using salt and only use a secret salt (i.e., pepper). Stated differently, to calculate the fingerprint, the CA calculates the Hash digest/value of [Dormant Public Key | Salt | Pepper].

When the certificate authority 2 wants to activate a dormant certificate, it is required to send the salt and pepper in the protocol. This essentially enables the ECUs to calculate the correct fingerprint and be sure that the successive dormant certificate is bound to the active one.

In other words, in some embodiments, the valid order is based on a hash included in a certificate comprising the dormant public key 205 of the substituting CA AKP, wherein the hash is calculated based on a salt included in the active public key 205' of the active CA AKP. Fig. 4 illustrates an example implementation with one active certificate 501 comprising an active public key 205' and N dormant certificates 502-50N comprising corresponding dormant public keys. Each certificate comprises the same certificate fields 500 and a unique dormant public key 205', 205(a)-(N). Each certificate stores a self-signed signature 511-51N of the certificate authority 2 to ensure the certificate has not been tampered with.

The order of activation of dormant certificates do matter, starting from 502 and ending at 50N, i.e., from right to left in the Fig. 4. In the active certificate 501, there is a hash value (fingerprint) of the next dormant certificate (i.e., its public key and a salt 501).

In these embodiments the pepper is revealed together with the master key, step S15. The pepper will also be encrypted and signed along with the master key. At the verifying S7, the ECU 10 checks if the hash value of the dormant public key and the pepper is identical to the one stated in the active certificate 205'. If so, then the ECU can be ensured that the correct dormant certificate is going to be activated. The salt and pepper for each dormant certificate must be unique, in this case with 10 dormant certificates, we would need 10 different salts and peppers.

There is typically an individual master key per dormant certificate for each ECU 10. However, the salt can be the same or not. For simplicity, we say the salts are the same for all ECUs (but still unique per dormant). Still, the system allows individualized secret salts per ECUs. In some embodiments, the hash is calculated based also on a salt (included in the active certificate) in addition to the pepper 501 included in the received message. Salt is a random number which is stored in clear text and the pepper is a secret salt, i.e., a random number that should be kept secret and stored on a secure storage. If the verifying S7 confirms that the dormant public key is a valid substitute, then the replacement can be initiated.

The compromised public key 205' can now be replaced. In other words, the method for use in a vehicle 1 then comprises replacing S8 the active public key 205' of the active CA AKP with the decrypted public key 205 of the substituting CA AKP. In some embodiments, the replacing S8 comprises revoking the active CA AKP and activating the substitute CA AKP, whereby the substitute CA AKP becomes the active CA AKP. This basically means that the compromised CA certificate can be deleted. Hence, at each point in time there is only one active CA AKP.

In some embodiments, the method for use in a vehicle 1 comprises sending S9 to the certificate authority 2 a confirmation that the active CA AKP has been successfully replaced. The confirmation is typically also signed, thus cannot be forged. For example, it is signed by the ECU private key 104.

The CA AKP also has to be replaced at the certificate authority 2. In some embodiments, the replacement is triggered by confirmations received from entities (such as ECUs 10) in the PKI. The replacement could also be performed right after, or within a certain time after sending S3 the message initiating the replacement. This basically means that the private and public keys of the active CA AKP are deleted, and that the substituting CA AKP becomes the "new" active CA AKP. In other words, the method in a certificate authority comprises replacing S17 the private key of the active CA AKP 204' with the private key of the substituting CA AKP 204. In some embodiments, the replacing S17 comprises revoking the active CA AKP and activating the substitute CA AKP, whereby the substitute CA AKP becomes the active CA AKP.

The compromised active CA AKP has now been successfully replaced. All ECU AKPs then also have to be reissued using the new active CA AKP. The method can then restart from the beginning, next time compromising is detected. As dormant certificates are used (or consumed) by the control arrangement 10 each time the active CA AKP is compromised, new dormant certificates may be sent to the control arrangement 10 using encrypted communication established using the active AKP. Alternatively, if all dormant CA certificates have been used due to the CA certificates being compromised, then new dormant certificates must be added at a service station of the OEM.

As described above, information revealing a master key should be sent to the control arrangement 10 every time an active certificate shall be replaced with a dormant one. However, it may be unfeasible to store a huge number of master keys in the certificate authority 2, which may be the case if there are many dormant CA certificates stored in each ECU 10.

However, one possibility, if there are multiple dormant certificates, is to let the certificate authority 2 securely store one master secret r and derive the distinct master keys from that master key using a hash-chain.

Fig. 5 illustrates an example of how distinct, or different, master keys can be derived from one single master secret r. In the Fig. 5, read from right to left, there is a random secret seed r, or call it master secret. Assume there are three dormant CA certificates (for simplicity denoted only certificates) on an ECU 10. To calculate/derive the distinct master key $H_1$ to encrypt/decrypt the first dormant certificate, one may calculate three hash operations $h(h(h(r)))$ on the master secret. To calculate/derive the distinct master key $H_2$ to encrypt/decrypt the second dormant certificate, one may calculate two hash operations $h(h(r))$ on the master secret r. To calculate/derive the distinct master key $H_3$ to encrypt/decrypt the third dormant certificate, one may calculate one hash operation $h(r)$ on the master secret. This technique is particularly useful when there are more than two dormant certificates. Hence, if the number of dormant certificates is large, then the need for such an approach is more tangible.

Dormant certificates, stored on individual control arrangements 10 (in the same or in different vehicles 10) may either be encrypted/decrypted with the same distinct master key, or with a distinct master key per control arrangement 10. Obviously, encrypting/decrypting dormant certificates with one distinct master key per control arrangement 10 is much more secure, as even if one distinct master key is breached, it does not affect other control arrangements 10.

However, the problem is the practicality for storing such a huge number of distinct master keys. Hence, having the same master key for all ECUs seems to be more practical. One possibility is to derive different distinct master keys from a single master secret so that each control arrangement 10 has a distinct master key. This is illustrated in Table. 1. In these embodiments, the certificate authority 2 stores one single master secret and all other distinct master keys can be derived from that single master secret.

With this approach, it is possible to create unlimited number of distinct master keys for new control arrangements 10 and unlimited number of keys for encrypting/decrypting dormant certificates.

In Table 1, the column represent 5 control arrangements 10 (denoted (a)-(e)) and there are 3 dormant certificates on each control arrangement 10. The certificate authority 2 generates a master secret r. The rows show how independent master keys $H_{x.y}$ for a substitute certificate can be derived using multiple hash operations, where x represents the ECU and y number of the dormant certificate in the certain order. In this example two different hash algorithms $h$ (for different ECUs) and $h'$ (for consecutive dormant certificates) are used. $H$ is a hash value from algorithm $h$. $H'$ is the hash value from algorithm $h'$.

Hence, for the first ECU 10(a) the independent master key of the first dormant certificate (in the certain order) is derived as the hash value $H_1 = h(r)$ of the master secret r using algorithm $h$. The second independent master key is derived as the hash value $H_2 = h'(h(r))$ of the previous independent master key $H_1 = h(r)$ using algorithm h'. The third independent master key is derived by double hash operations on $H_1$ using algorithm h', and so on. Thus, $H_{1.1}$, $H_{1.2}$, and $H_{1.3}$ would be the three distinct master keys for encrypting/decrypting of dormant certificates on a first control arrangement 10(a), and so on.

The same principle is used for the other ECUs 10(b)-(d). This process is efficient and has extremely low computation overhead and high security. At the same time, there is no limit on the number of ECUs/components and the number of dormant certificates.

*Table 1. illustrates how to derive distinct master keys from a single master secret*

| 10(e) | 10(d) | 10(c) | 10(b) | 10(a) |
|---|---|---|---|---|
| $h(h(h(h(h(r)))))\downarrow$ | $\leftarrow h(h(h(h(r)))) \downarrow$ | $\leftarrow h(h(h(r))) \downarrow$ | $\leftarrow h(h(r)) \downarrow$ | $\leftarrow h(r) \downarrow$ |
| $H_5$ | $H_4$ | $H_3$ | $H_2$ | $H_1$ |
| $h'(H'_{5.1}) \downarrow$ | $h'(H'_{4.1}) \downarrow$ | $h'(H'_{3.1}) \downarrow$ | $h'(H'_{2.1}) \downarrow$ | $h'(H'_{1.1}) \downarrow$ |
| $H'_{5.1}$ | $H'_{4.1}$ | $H'_{3.1}$ | $H'_{2.1}$ | $H'_{1.1}$ |
| $h'(H'_{5.1}) \downarrow$ | $h'(H'_{4.1}) \downarrow$ | $h'(H'_{3.1}) \downarrow$ | $h'(H'_{2.1}) \downarrow$ | $h'(H'_{1.1}) \downarrow$ |
| $H'_{5.2}$ | $H'_{4.2}$ | $H'_{3.2}$ | $H'_{2.2}$ | $H'_{1.2}$ |
| $h'(H'_{5.2}) \downarrow$ | $h'(H'_{4.2}) \downarrow$ | $h'(H'_{3..2}) \downarrow$ | $h'(H'_{2.2}) \downarrow$ | $h'(H'_{1.2}) \downarrow$ |
| $H'_{5.3}$ | $H'_{4.3}$ | $H'_{3.3}$ | $H'_{2.3}$ | $H'_{1.3}$ |

The terminology used in the description of the embodiments as illustrated in the accompanying drawings is not intended to be limiting of the described method, control unit or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR XOR, unless expressly stated otherwise. In addition, the singular forms "a", "an" and "the" are

**EP 4 523 366 B1**

to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as, e.g., a processor, may fulfil the functions of several items recited in the claims.

**Claims**

1. A method, for use in a control arrangement (10) arranged in a vehicle (1), for replacing a compromised root certificate authority asymmetric key pair, CA AKPs, used for secure communication, the method comprising:

   - storing (S1) in the control arrangement (10) one or more dormant public keys (205) of one or more dormant root CA AKPs, wherein the one or more dormant public keys (204) are encrypted by a respective master key,
   - storing (S2), in the control arrangement (10), an active public key (204') of the active root CA AKP,
   - receiving (S3), from a certificate authority, a message revealing a master key of one of the one or more dormant root CA AKPs that constitutes a substituting root CA AKP that shall replace the active root CA AKP due to compromising,
   - decrypting (S6) the dormant public key (205) of the substituting root CA AKP using the master key revealed by the received message, and
   - replacing (S8) the active public key (205') with the decrypted dormant public key (205).

2. The method according to claim 1, wherein the method comprises:

   - decrypting (S4) and/or validating authenticity of the received message.

3. The method according to any one of the preceding claims, wherein the method comprises:

   - verifying (S7) that the substituting root CA AKP is a valid replacement of the active root CA AKP.

4. The method according to claim 3, wherein the one or more dormant root CA AKP have been assigned a particular order in which they are to replace the active root CA AKP and wherein the verifying (S7) comprises validating that the replacement root CA AKP is a valid successor of the active root CA AKP.

5. The method according to claim 4, wherein the valid order is based on a hash included in a certificate comprising the dormant public key (205) of the substituting root CA AKP, wherein the hash is calculated based on a salt included in the active public key (205').

6. The method according to claim 5, wherein the hash is calculated based on the salt and a pepper included in the received message.

7. The method according to any one of the preceding claims, wherein the replacing (S8) comprises revoking the active root CA AKP and activating the substituting root CA AKP, whereby the substituting root CA AKP becomes the active root CA AKP.

8. The method according to any one of the preceding claims, wherein the method comprises:

   - sending (S9) to the certificate authority (2) a confirmation that the active root CA AKP has been successfully replaced.

9. The method according to any one of the preceding claims, wherein the master key for decrypting the dormant public key (205) of the substituting root CA AKP is included in the received message.

10. A method, for use in a certificate authority (2), for replacing a compromised root certificate authority asymmetric key pair, root CA AKP, used for secure communication by a plurality of control arrangements (10) arranged in vehicles (1), the method comprising:

- storing (S11) in the certificate authority (2) one or more private keys of one or more dormant root CA AKPs (204), wherein corresponding one or more dormant public keys (205) are stored in the control arrangements (10) encrypted by a respective master key,

- storing (S12), in the certificate authority (2), a private key of the active root CA AKP (204'),

- detecting (S13) compromising of the active root CA AKP,

- obtaining (S14), in response to the detecting (S13), information revealing a master key of a substituting root CA AKP that shall replace the active root CA AKP, wherein the substituting root CA AKP corresponds to one of the one or more dormant root CA AKPs,

- sending (S15), to the control arrangements (10), a message revealing the master key, wherein the obtained master key enables the control arrangements (10) to decrypt a dormant public key (205) of the substituting root CA AKP,

- replacing (S17) the private key of the active root CA AKP (204') with the private key of the substituting root CA AKP (204).

11. The method according to claim 10, wherein the message is signed by the private key of the active root CA AKP (204').

12. The method according to any one of claims 10 or 11, wherein the master key required for decrypting the dormant public key (205) of the substituting root CA AKP is included in the sent message.

13. The method according to any one of claims 10 to 12, wherein the obtaining (S14) comprises retrieving the master key from another entity.

14. The method according to any one of claims 10 to 13, wherein only one of the dormant root CA AKPs is a valid substituting root CA AKP of the active root CA AKP and wherein the obtaining (S14) comprises obtaining the master key of the valid substituting root CA AKP.

15. The method according to any one of claims 10 to 14, wherein the one or more dormant root CA AKP have been assigned a particular order in which they are to replace the active root CA AKP and wherein the obtaining (S14) is based on the assigned order.

16. The method according to any one of claims 10 to 15, wherein the replacing (S17) comprises revoking the active root CA AKP and activating the substituting root CA AKP, whereby the substituting root CA AKP becomes the active root CA AKP.

17. The method according to any one of claims 10 to 16, wherein the method comprises:

- receiving (S16) from one or more of the plurality of control arrangements (10) a confirmation that the active root CA AKP has been successfully replaced.

18. The method according to any one of the preceding claims, wherein the particular order is only known by the certificate authority and the control arrangement or control arrangements (10).

19. A computer program comprising instructions which, when the program is executed by a computer, cause the computer to carry out the method of any one of the claims 1 to 18.

20. A computer-readable storage medium comprising instructions which, when executed by a computer, cause the computer to carry out the method of any one of the claims 1 to 18.

21. A control arrangement (10,20) configured to perform the method according to any one of claims 1 to 18.

22. A vehicle comprising a control arrangement (10) configured to perform the method according to any one of claims 1 to 9.

**Patentansprüche**

1. Verfahren zur Verwendung in einer in einem Fahrzeug (1) angeordneten Steueranordnung (10), um ein kompromittiertes asymmetrisches Schlüsselpaar einer Root-Zertifizierungsstelle (engl. root certificate authority asymmetric key pair), CA AKP) zu ersetzen, da für sichere Kommunikation verwendet wird, wobei das Verfahren umfasst:

- Speichern (S1) eines oder mehrerer inaktiver öffentlicher Schlüssel (205) eines oder mehrerer inaktiver Root-CA-AKPs in der Steueranordnung (10), wobei der eine oder die mehreren inaktiven öffentlichen Schlüssel (205) mit einem jeweiligen Master-Schlüssel verschlüsselt sind,
- Speichern (S2) eines aktiven öffentlichen Schlüssels (204') des aktiven Root-CA-AKPs in der Steueranordnung (10),
- Empfangen (S3) einer Nachricht von einer Zertifizierungsstelle, die einen Master-Schlüssel eines der einen oder mehreren inaktiven Root-CA-AKPs offenbart, welcher einen ersetzenden Root-CA-AKP darstellt, der den aktiven Root-CA-AKP aufgrund einer Kompromittierung ersetzen soll,
- Entschlüsseln (S6) des inaktiven öffentlichen Schlüssels (205) des ersetzenden Root-CA-AKPs unter Verwendung des durch die empfangene Nachricht offenbarten Master-Schlüssels, und
- Ersetzen (S8) des aktiven öffentlichen Schlüssels (205') durch den entschlüsselten inaktiven öffentlichen Schlüssel (205).

2. Verfahren nach Anspruch 1, wobei das Verfahren umfasst:

- Entschlüsseln (S4) und/oder Validieren der Authentizität der empfangenen Nachricht.

3. Verfahren nach einem der vorangehenden Ansprüche, wobei das Verfahren umfasst:

- Verifizieren (S7), dass der ersetzende Root-CA-AKP ein gültiger Ersatz für den aktiven Root-CA-AKP ist.

4. Verfahren nach Anspruch 3, wobei dem einen oder den mehreren inaktiven Root-CA-AKPs eine bestimmte Reihenfolge zugewiesen wurde, in der sie den aktiven Root-CA-AKP ersetzen sollen, und wobei das Verifizieren (S7) das Validieren umfasst, dass der ersetzende Root-CA-AKP ein gültiger Nachfolger des aktiven Root-CA-AKPs ist.

5. Verfahren nach Anspruch 4, wobei die gültige Reihenfolge auf einem Hash-Wert basiert, der in einem Zertifikat enthalten ist, welches den inaktiven öffentlichen Schlüssel (205) des ersetzenden Root-CA-AKPs umfasst, wobei der Hash-Wert basierend auf einem Salt berechnet wird, welcher im aktiven öffentlichen Schlüssel (205') enthalten ist.

6. Verfahren nach Anspruch 5, wobei der Hash-Wert basierend auf dem Salt und einem Pepper berechnet wird, welcher in der empfangenen Nachricht enthalten ist.

7. Verfahren nach einem der vorangehenden Ansprüche, wobei das Ersetzen (S8) das Widerrufen des aktiven Root-CA-AKPs und das Aktivieren des ersetzenden Root-CA-AKPs umfasst, wodurch der ersetzende Root-CA-AKP zum aktiven Root-CA-AKP wird.

8. Verfahren nach einem der vorangehenden Ansprüche, wobei das Verfahren umfasst:

- Senden (S9) einer Bestätigung an die Zertifizierungsstelle (2), dass der aktive Root-CA-AKP erfolgreich ersetzt wurde.

9. Verfahren nach einem der vorangehenden Ansprüche, wobei der Master-Schlüssel zum Entschlüsseln des inaktiven öffentlichen Schlüssels (205) des ersetzenden Root-CA-AKPs in der empfangenen Nachricht enthalten ist.

10. Verfahren zur Verwendung in einer Zertifizierungsstelle (2) zum Ersetzen eines kompromittierten asymmetrischen Schlüsselpaars einer Root-Zertifizierungsstelle, Root-CA-AKP, welches zur sicheren Kommunikation durch eine Vielzahl von in Fahrzeugen (1) angeordneten Steueranordnungen (10) verwendet wird, wobei das Verfahren umfasst:

- Speichern (S11) eines oder mehrerer privater Schlüssel eines oder mehrerer inaktiver Root-CA-AKPs (204) in der Zertifizierungsstelle (2), wobei entsprechende eine oder mehrere inaktive öffentliche Schlüssel (205) in den Steueranordnungen (10) mit einem jeweiligen Master-Schlüssel verschlüsselt gespeichert sind,
- Speichern (S12) eines privaten Schlüssels des aktiven Root-CA-AKPs (204') in der Zertifizierungsstelle (2),
- Erfassen (S13) einer Kompromittierung des aktiven Root-CA-AKPs,
- Erhalten (S14), als Reaktion auf das Erfassen (S13), von Informationen, die einen Master-Schlüssel eines ersetzenden Root-CA-AKPs offenbaren, der den aktiven Root-CA-AKP ersetzen soll, wobei der ersetzende Root-CA-AKP einem der einen oder mehreren inaktiven Root-CA-AKPs entspricht,
- Senden (S15) einer Nachricht, die den Master-Schlüssel offenbart, an die Steueranordnungen (10), wobei der erhaltene Master-Schlüssel es den Steueranordnungen (10) ermöglicht, einen inaktiven öffentlichen Schlüssel (205) des ersetzenden Root-CA-AKPs zu entschlüsseln,
- Ersetzen (S17) des privaten Schlüssels des aktiven Root-CA-AKPs (204') durch den privaten Schlüssel des ersetzenden Root-CA-AKPs (204).

11. Verfahren nach Anspruch 10, wobei die Nachricht mit dem privaten Schlüssel des aktiven Root-CA-AKPs (204') signiert ist.

12. Verfahren nach einem der Ansprüche 10 oder 11, wobei der zur Entschlüsselung des inaktiven öffentlichen Schlüssels (205) des ersetzenden Root-CA-AKPs erforderliche Master-Schlüssel in der gesendeten Nachricht enthalten ist.

13. Verfahren nach einem der Ansprüche 10 bis 12, wobei das Erhalten (S14) das Abrufen des Master-Schlüssels von einer anderen Instanz umfasst.

14. Verfahren nach einem der Ansprüche 10 bis 13, wobei nur einer der inaktiven Root-CA-AKPs ein gültiger ersetzender Root-CA-AKP für den aktiven Root-CA-AKP ist und wobei das Erhalten (S14) das Erhalten des Master-Schlüssels des gültigen ersetzenden Root-CA-AKPs umfasst.

15. Verfahren nach einem der Ansprüche 10 bis 14, wobei dem einen oder den mehreren inaktiven Root-CA-AKPs eine bestimmte Reihenfolge zugewiesen wurde, in der sie den aktiven Root-CA-AKP ersetzen sollen, und wobei das Erhalten (S14) auf der zugewiesenen Reihenfolge basiert.

16. Verfahren nach einem der Ansprüche 10 bis 15, wobei das Ersetzen (S17) das Widerrufen des aktiven Root-CA-AKPs und das Aktivieren des ersetzenden Root-CA-AKPs umfasst, wodurch der ersetzende Root-CA-AKP zum aktiven Root-CA-AKP wird.

17. Verfahren nach einem der Ansprüche 10 bis 16, wobei das Verfahren umfasst:

- Empfangen (S16) einer Bestätigung von einer oder mehreren der Vielzahl von Steueranordnungen (10), dass der aktive Root-CA-AKP erfolgreich ersetzt wurde.

18. Verfahren nach einem der vorangehenden Ansprüche, wobei die bestimmte Reihenfolge nur der Zertifizierungsstelle und der Steueranordnung oder den Steueranordnungen (10) bekannt ist.

19. Computerprogramm mit Befehlen, die, wenn das Programm von einem Computer ausgeführt wird, den Computer dazu veranlassen, das Verfahren nach einem der Ansprüche 1 bis 18 auszuführen.

20. Computerlesbares Speichermedium mit Befehlen, die, wenn sie von einem Computer ausgeführt werden, den Computer dazu veranlassen, das Verfahren nach einem der Ansprüche 1 bis 18 auszuführen.

21. Steueranordnung (10, 20), die zur Durchführung des Verfahrens nach einem der Ansprüche 1 bis 18 konfiguriert ist.

22. Fahrzeug umfassend eine Steueranordnung (10), die zur Durchführung des Verfahrens nach einem der Ansprüche 1 bis 9 konfiguriert ist.

**Revendications**

1. Procédé, destiné à être utilisé dans un agencement de commande (10) agencé dans un véhicule (1), pour remplacer une paire de clés asymétriques d'autorité de certification racine compromise, CA AKP, utilisée pour une communication sécurisée, le procédé comprenant :

- la mémorisation (S1) dans le dispositif de commande (10) d'une ou plusieurs clés publiques dormantes (205) d'une ou plusieurs racines dormantes CA AKP, dans lequel les une ou plusieurs clés publiques dormantes (204) sont chiffrées par une clé maîtresse respective,

- le stockage (S2), dans le dispositif de commande (10), d'une clé publique active (204') de la racine active CA AKP,
- la réception (S3), à partir d'une autorité de certification, d'un message révélant une clé maîtresse de l'un des un ou plusieurs CA AKP de racine dormante qui constitue une racine de substitution CA AKP qui remplacera la racine active CA AKP en raison de la compromission,
- le décryptage (S6) de la clé publique dormante (205) de la racine de substitution CA AKP à l'aide de la clé maîtresse révélée par le message reçu, et
- le remplacement (S8) de la clé publique active (205') par la clé publique dormante déchiffrée (205).

2. Procédé selon la revendication 1, dans lequel le procédé comprend :

- le décryptage (S4) et/ou la validation de l'authenticité du message reçu.

3. Procédé selon l'une quelconque des revendications précédentes, dans lequel le procédé comprend :

- la vérification (S7) que la racine de substitution CA AKP est un remplacement valide de la racine active CA AKP.

4. Procédé selon la revendication 3, dans lequel une ou plusieurs racines dormantes CA AKP ont reçu un ordre particulier dans lequel elles doivent remplacer la racine active CA AKP et dans lequel la vérification (S7) comprend la validation que la racine de remplacement CA AKP est un successeur valide de la racine active CA AKP.

5. Procédé selon la revendication 4, dans lequel l'ordre valide est basé sur un hachage inclus dans un certificat comprenant la clé publique dormante (205) de la racine de substitution CA AKP, dans lequel le hachage est calculé sur la base d'un sel inclus dans la clé publique active (205').

6. Procédé selon la revendication 5, dans lequel le hachage est calculé sur la base du sel et d'un poivre inclus dans le message reçu.

7. Procédé selon l'une quelconque des revendications précédentes, dans lequel le remplacement (S8) comprend la révocation de la racine active CA AKP et l'activation de la racine de substitution CA AKP, la racine de substitution CA AKP devenant la racine active CA AKP.

8. Procédé selon l'une quelconque des revendications précédentes, dans lequel le procédé comprend :

- l'envoi (S9) à l'autorité de certification (2) d'une confirmation que la racine active CA AKP a été remplacée avec succès.

9. Procédé selon l'une quelconque des revendications précédentes, dans lequel la clé maîtresse pour décrypter la clé publique dormante (205) de la racine de substitution CA AKP est incluse dans le message reçu.

10. Procédé, destiné à être utilisé dans une autorité de certification (2), pour remplacer une paire de clés asymétriques d'autorité de certification racine compromise, racine CA AKP, utilisée pour une communication sécurisée par une pluralité d'agencements de commande (10) agencés dans des véhicules (1), le procédé comprenant :

- le stockage (S11) dans l'autorité de certification (2) d'une ou de plusieurs clés privées d'un ou de plusieurs CA AKP à racine dormante (204), dans lequel une ou plusieurs clés publiques dormantes correspondantes (205) sont stockées dans les agencements de commande (10) chiffrées par une clé maîtresse respective,
- le stockage (S12), dans l'autorité de certification (2), d'une clé privée de la racine active CA AKP (204'),
- la détection (S13) de la compromission de la racine active CA AKP,
- l'obtention (S14), en réponse à la détection (S13), d'informations révélant une clé maîtresse d'une racine de substitution CA AKP qui doit remplacer la racine active CA AKP, où la racine de substitution CA AKP correspond à l'un des un ou plusieurs CA AKP de racine dormante,
- l'envoi (S15), aux dispositifs de commande (10), d'un message révélant la clé maîtresse, dans lequel la clé maîtresse obtenue permet aux dispositifs de commande (10) de déchiffrer une clé publique dormante (205) de la racine de substitution CA AKP,
- le remplacement (S17) de la clé privée de la racine active CA AKP (204') par la clé privée de la racine de substitution CA AKP (204).

**11.** Procédé selon la revendication 10, dans lequel le message est signé par la clé privée de la racine active CA AKP (204').

**12.** Procédé selon l'une quelconque des revendications 10 ou 11, dans lequel la clé maîtresse requise pour déchiffrer la clé publique dormante (205) de la racine de substitution CA AKP est incluse dans le message envoyé.

**13.** Procédé selon l'une quelconque des revendications 10 à 12, dans lequel l'obtention (S14) comprend la récupération de la clé maîtresse à partir d'une autre entité.

**14.** Procédé selon l'une quelconque des revendications 10 à 13, dans lequel un seul des CA AKP de racine dormante est une racine de substitution CA AKP valide de la racine active CA AKP et dans lequel l'obtention (S14) comprend l'obtention de la clé maîtresse de la racine de substitution CA AKP valide.

**15.** Procédé selon l'une quelconque des revendications 10 à 14, dans lequel une ou plusieurs racines dormantes CA AKP ont été affectées à un ordre particulier dans lequel elles doivent remplacer la racine active CA AKP et dans lequel l'obtention (S14) est basée sur l'ordre affecté.

**16.** Procédé selon l'une quelconque des revendications 10 à 15, dans lequel le remplacement (S17) comprend la révocation de la racine active CA AKP et l'activation de la racine de substitution CA AKP, la racine de substitution CA AKP devenant la racine active CA AKP.

**17.** Procédé selon l'une quelconque des revendications 10 à 16, dans lequel le procédé comprend :

- la réception (S16) à partir d'un ou plusieurs agencements de la pluralité d'agencements de commande (10) d'une confirmation que la racine active CA AKP a été remplacée avec succès.

**18.** Procédé selon l'une quelconque des revendications précédentes, dans lequel l'ordre particulier n'est connu que de l'autorité de certification et du ou des dispositifs de commande (10).

**19.** Programme informatique comprenant des instructions qui, lorsque le programme est exécuté par un ordinateur, amènent l'ordinateur à exécuter le procédé selon l'une quelconque des revendications 1 à 18.

**20.** Support de stockage lisible par ordinateur comprenant des instructions qui, lorsqu'elles sont exécutées par un ordinateur, amènent l'ordinateur à exécuter le procédé selon l'une quelconque des revendications 1 à 18.

**21.** Dispositif de commande (10, 20) configuré pour exécuter le procédé selon l'une quelconque des revendications 1 à 18.

**22.** Véhicule comprenant un agencement de commande (10) configuré pour exécuter le procédé selon l'une quelconque des revendications 1 à 9.

FIG. 1

FIG. 2

| 20 | | 10 |
|---|---|---|

S11, S12 Store active and dormant private keys

S1, S2 Store (certificates comprising) active and dormant public keys

S13 Detect compromising

S14 master key (+ secret salt)

S3, S15 (encrypted/signed) Information revealing ind. master key

S4 Decrypt and/or validate

S5 Obtain master key

S6 Decrypt substitute with master key

S7 Verify that substitute is valid

S8 Replace with valid dormant

S9, S16 (signed) Replacement ACK

S17 Replace active with valid substitute

S10, S18 Update ECU certs

S101, S19 Add more dormant keys

FIG. 3

|  | 50N |  | 503 |  | 502 |  | 501 |
|---|---|---|---|---|---|---|---|

| 500 | 500 | 500 | 500 |
|---|---|---|---|
| 205(N) | 205(b) | 205(a) | 205' |
| $h(501\,|\,205(N-1))$ | $h(501\,|\,205(c))$ | $h(501\,|\,205(b))$ | $h(501\,|\,205(a))$ |
| 51N | 513 | 512 | 511 |

## Fig. 4

$$h(h(h(r))) \longleftarrow h(h(r)) \longleftarrow h(r) \longleftarrow r$$

$$\downarrow \qquad\qquad \downarrow \qquad\qquad \downarrow$$

$$H_1 \qquad\qquad H_2 \qquad\qquad H_3$$

## Fig. 5